Europäisches Patentamt

European Patent Office

Office européen des brevets

(11) Publication number : **0 493 091 A1**

(12) **EUROPEAN PATENT APPLICATION**

(21) Application number : **91311982.2**

(22) Date of filing : **23.12.91**

(51) Int. Cl.$^5$ : **H04N 1/387, G09C 5/00, G06K 1/12**

(30) Priority : **27.12.90 US 634371**

(43) Date of publication of application :
**01.07.92 Bulletin 92/27**

(84) Designated Contracting States :
**DE FR GB**

(71) Applicant : **XEROX CORPORATION**
**Xerox Square - 020**
**Rochester New York 14644 (US)**

(72) Inventor : **Tow, Robert F.**
**951 Maddux Street**
**Palo Alto CA, 94303 (US)**

(74) Representative : **Johnson, Reginald George et al**
**Rank Xerox Patent Department, Albion House,**
**55 New Oxford Street**
**London WC1A 1BS (GB)**

(54) **Method and system for embedding machine readable digital data in grayscale images.**

(57)   The present invention provides a system and method for unobtrusively embedding machine readable digital data of many different types in grayscale images for a wide variety of different purposes. To accomplish that, digital data is written into such an image by means of a low contrast modulation of the grayscale density of background portions and/or certain foreground features of the images, suitably at a spatial frequency and a modulation contrast that cause the resulting grayscale modulation of the image to fall below the perceptual threshold of the ordinary observer who views the image from normal viewing distance. The foreground features that are amenable to having digital data encoded in them are those that nominally have a substantially uniform grayscale density over an appreciable area, such as alphanumeric characters and halftone dot patterns, as well as uniformly shaded lines and blocks.

*Fig. 1*

This invention relates generally to psychophysically improved techniques for embedding machine readable digital data in grayscale images and, more particularly, to a method and system for unobtrusively encoding machine readable data in hardcopy prints of such images.

Grayscale printing processes have been developed for producing hardcopy renderings of scanned-in and computer generated synthetic images. For example, the Fuji Xerox SCATT printer employs a thermal sublimation process for printing grayscale digital images containing up to 256 levels of gray at a resolution of 254 spots/inch (s.p.i.).

Polychromatic imaging (sometimes simply referred to as "color imaging") is becoming increasingly important and commonplace for digital image processing applications. It, therefore, is to be understood that the present invention can be utilized for embedding digital data in printed renderings of polychromatic grayscale images, typically by employing multiple iterations of the same data encoding process for identically encoding the data in each of the color separations that are provided to produce such renderings. However, in the interest of simplifying this disclosure the following discussion will concentrate on the monochromatic case.

Others have recognized that the functional utility of plain paper and other types of hardcopy documents can be enhanced significantly if the human readable information that they normally convey is supplemented by adding appropriate machine readable digital data to them. This digital data can be recovered by existing input scanners, so the data can be employed for various purposes during the electronic processing of such documents and their human readable contents by electronic document processing systems, such as electronic copiers, text and graphic image processing systems, facsimile systems, electronic mail systems, electronic file systems, and document and character recognition equipment.

As is known, machine readable digital data can be recorded by writing two dimensional marks on a recording medium in accordance with a pattern which encodes the data either by the presence or absence of marks at a sequence of spatial locations or by the presence or absence of mark related transitions at such locations. The bar-like codes which others have proposed for recording digital data on paper utilize that type of encoding. See US Patent No. 4,692,603 on "Optical Reader for Printed Bit-Encoded Data and Method of Reading Same," US Patent No. 4,728,783 and US Patent No. 4,754,127 on "Method and Apparatus for Transforming Digitally Encoded Data into Printed Data Strips," and US Patent No. 4,782,221 on "Printed Data Strip Including Bit-Encoded Information and Scanner Contrast." Another interesting approach is to encode machine readable digital data in the shapes of the marks or "glyphs" that are written on the recording medium.

Some of the recent work in this field has focused on the printed appearance of the codes that are employed for embedding digital data in hardcopy documents. For example, it has been shown that glyph shape codes can be designed to have a more or less uniform grayscale appearance. However, there still is a need for even less obtrusive codes for encoding digital data on hardcopy documents.

An object of the present invention is to provide a method and system for unobtrusively embedding machine readable digital data in grayscale images.

Accordingly, the present invention provides a system for embedding binary data in a grayscale image that is defined a set of grayscale image samples that have various grayscale values, characterised in that said system includes a grayscale modulator for modulating selected ones of said image samples in accordance with said binary data to superimpose a low contrast binary modulation on said selected image samples, said selected image samples having constant nominal grayscale values that are modulated in accordance with said binary data; and a grayscale printer coupled to said modulator for printing a hardcopy rendering of said image in response to said image samples, thereby embedding said binary data in said hardcopy.

The present invention also provides a method for embedding binary data in a hardcopy rendering of a grayscale image that is defined by a set of image samples of varying grayscale value, characterised in that said method includes selecting image samples for at least one spatially contiguous portion of said image that are of constant nominal grayscale value; modulating the grayscale values of said selected image samples in accordance with said binary data to cause said selected image samples to swing back and forth between near neighboring grayscale values at a predetermined frequency as a function of said binary data; and printing said hardcopy rendering of said image in response to said image samples, including said selected samples.

In various embodiments the digital data is written into such an image by means of a low contrast modulation of the grayscale density of background portions and/or certain foreground features of the images, suitably at a spatial frequency and a modulation contrast that cause the resulting grayscale modulation of the image to fall below the perceptual threshold of the ordinary observer who views the image from normal viewing distance under normal illumination conditions. The foreground features that are amenable to having digital data encoded in them in accordance with this invention are those that nominally have a substantially uniform grayscale density over an appreciable area, such as alphanumeric characters and halftone dot patterns, as well as uniformly shaded lines and blocks.

The invention will be described further, by way of example, with reference to the accompanying drawings, in which:-

Fig. 1 is a simplified block diagram of a grayscale imaging system that embodies the present invention;

Fig. 2 is an enlarged grayscale image that has digital data encoded in its foreground and background in accordance with an abnormally high contrast implementation of this invention;

Fig. 3 is an enlarged grayscale image of an alphanumeric character that has its ASCII calling code embedded in it, again at an abnormally high contrast to provide a visible presentation of the grayscale modulation; and

Fig. 4 is a curve illustrating the perceptual threshold and the sensitivity of a normal human adult observer, who views an image at normal viewing distance under normal illumination conditions, to contrast variations occurring at different spatial frequencies.

While the invention is described in some detail hereinbelow with specific reference to an illustrated embodiment, it is to be understood that there is no intent to limit it to that embodiment. On the contrary, the aim is to cover all alternatives, modifications, and equivalents falling within the scope of the invention as defined by the appended claims.

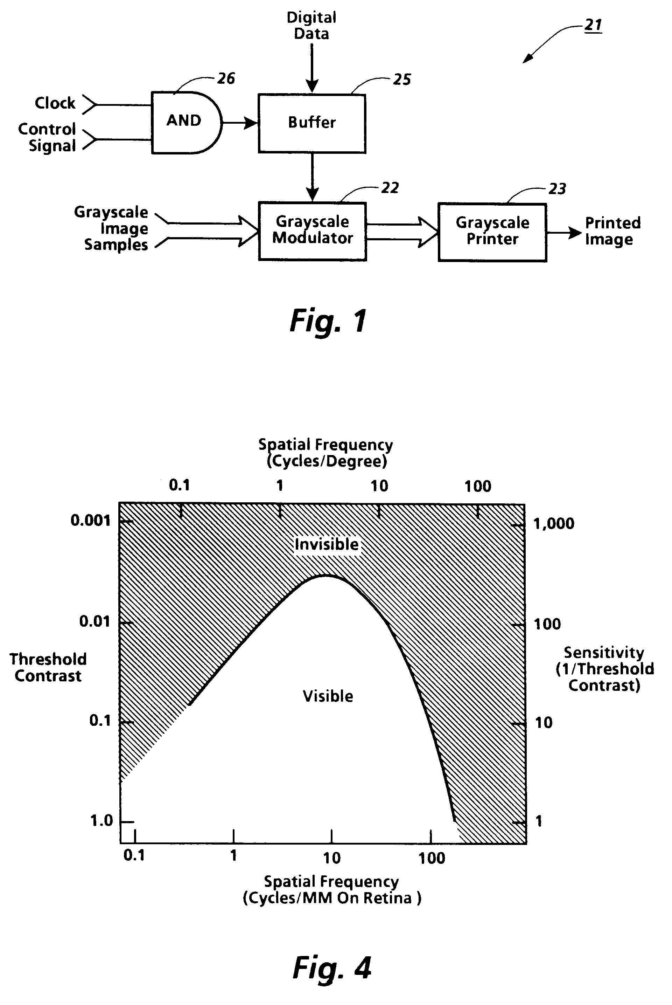

Turning now to the drawings, and at this point especially to Fig. 1, there is a grayscale imaging system 21 comprising a grayscale modulator 22 for superimposing a low contrast binary modulation on certain of the grayscale image samples that are provided at a predetermined sample rate (by means not shown) to cause a more or less conventional grayscale printer 23 to produce a hardcopy print of a scanned-in or a computer generated synthetic grayscale image. As will be appreciated, the modulation of the image samples for preselected foreground and/or background portions of the image in accordance with binary data causes the printer 23 to correspondingly modulate the grayscale of the selected portions of the printed image, thereby embedding the binary data in the printed image. In keeping with this invention, however, the contrast and spatial frequency of this modulation are selected to prevent the modulation from materially detracting from the perceived quality of the printed image (i. e., the modulation that is performed by the modulator 22 causes the grayscale sample values that are applied to the printer 23 to swing back and forth between near neighboring gray scale levels as a function of the binary data). Indeed, as described in some additional detail hereinbelow, the contrast and spatial frequency of the binary modulation of the image preferably are selected to cause the modulation to fall below the perceptual threshold of an ordinary observer who views the printed image at normal viewing distance.

As illustrated, the binary data that is to be embedded in the printed image is loaded (by means not shown) into a buffer 25 that is toggled into and out of operation by a control signal for serially applying the binary data to the modulator 22 at a predetermined clock frequency in timed synchronism with the image samples for the portions of the image in which it is desired to embed the binary data. The modulator 22 operates in a standby mode to pass unaltered grayscale image samples to the printer 23 whenever the control signal is at a false ("0") logic level. But when the control signal is at a true ("1") logic level, an AND gate 26 gates clock pulses to the buffer 25 at a predetermined frequency, thereby causing the buffer 25 to serially apply the binary data to the modulator 22 at the clock frequency. The clock frequency for the buffer 25 is selected to be an integer multiple of the rate at which image samples are applied to the printer 23 to permit reliable recovery of the binary data. As a general rule, the spatial resolution of the printer 23 also is taken into account while selecting the clock frequency for the buffer 25 to cause the binary data to be embedded in the printed image at a desired spatial frequency.

Various techniques may be employed for synchronizing the modulator 22 with the printer 23. For example, if a page description language (PDL) decomposer (not shown) is employed for generating the grayscale image samples for the printer 23 from a PDL encoding of the document that is to be printed, the PDL decomposition of the document may be analyzed (by means not shown) to identify the image samples that correspond to preselected, uniformly toned foreground features or background areas of the document. Alternatively, the grayscale image samples may analyzed (by means not shown) to identify sequences of "white" (background) or "black" (uniformly toned foreground at the upper end of the grayscale range) samples in excess of a predetermined run length.

Likewise, the digital data that is embedded in the printed image may take several forms. For instance, the embedded data could encode a PDL description of the document, preferably using a spatially distributed, redundant encoding so that a "clean copy" of document could be reconstructed from a printed copy that has been marked-up, stained, or even partially destroyed. Or, alternative incarnations of a document, such as foreign language translations of it, may be digitally embedded in a printed copy of the document. Similarly, digitized sound or speech could be digitally recorded in a printed document. Furthermore, this invention may be employed to digitally embed hypertext or hypermedia pointers in hardcopy prints of grayscale documents. Moreover, digital signatures, copy authorization codes, editing histories, and even encrypted messages could all be digitally embedded in such grayscale prints.

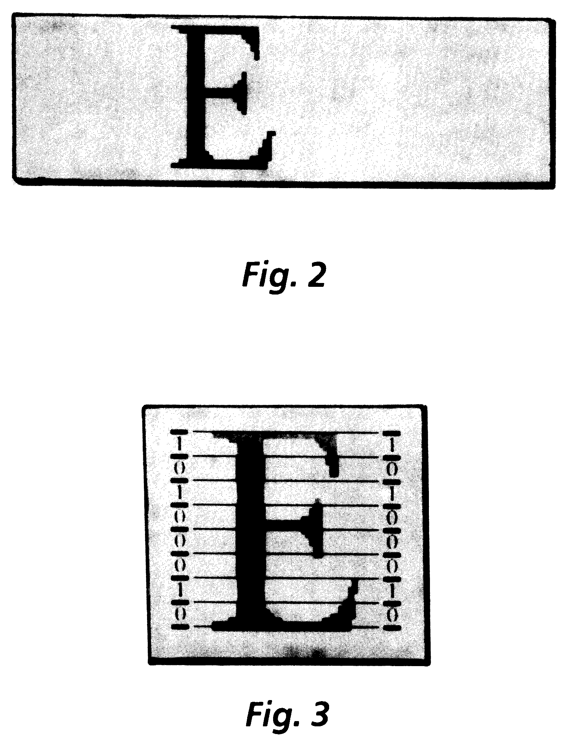

Fig. 2 illustrates a relatively simple grayscale image that has digital data embedded in its foreground and background in accordance with an embodiment of the invention. The contrast of the digital modulation of this image has been exaggerated for illustrative purposes, but it will be seen that this embodiment may be utilized for embedding digital data in any nominally uniformly gray foreground or background area of a grayscale print that significantly exceeds the spatial resolution of the printer 23 (Fig. 1). Fig. 3 shows, again in exaggerated contrast form, the use of an embodiment of the present invention for encoding the ASCII calling code for an alphanumeric character in the printed representation of the character (in this instance, the code is oriented vertically with respect to the character). As will be appreciated, embedded ASCII calling codes may be used in lieu of, or as an error correction mechanism for, standard character recognition techniques for transforming printed alphanumeric text back into the electronic domain.

Turning now to Fig. 4, the contrast sensitivity function described by Robert Sekular et al., A Contemporary Approach to Form Perception, Alfred F. Knopf, Inc., N. Y., N. Y, 1985, p. 155 leads to the conclusion that grayscale variations of less than about 1.2% that occur at a spatial frequency of at least about 127 cycles/inch (or, in terms of printer resolution, about 254 s. p. i.) fall below the perceptual threshold of an ordinary observer who views a grayscale image at a normal viewing distance of 14 inches. This suggests that binary data can be sub-perceptually encoded in a grayscale image that is printed by a 256 gray level printer by restricting the modulation contrast to three or fewer grayscale levels. However, crosstalk between closely adjacent pixels and/or other printer anamolies may require the use of a lower spatial frequency for writing the digital data into the printed image. Thus, it is notable that such a printer may sub-perceptually embed digital data in a printed image at a spatial frequency as low as about 63 cycles/inch (126 s. p. i.) if the modulation contrast is limited to be less than about 0.045% (i. e., about one level out of 256).

In view of the foregoing, it now will be understood that the present invention provides a method and system for unobtrusively embedding digital data of various descriptions in grayscale hardcopy prints of scanned-in and computer generated synthetic images, thereby enhancing the functionality of such prints. It also will be appreciated, that the spatial frequency and the modulation contrast at which the digital data is embedded in such images are selected to prevent the embedded data from materially degrading the perceived quality of the printed image. Indeed, it will be evident that state of the art grayscale printers have sufficient grayscale resolution for sub-perceptually encoding digital data into the images they print.

## Claims

1. A system (21) for embedding binary data in a grayscale image that is defined a set of grayscale image samples that have various grayscale values, characterised in that said system (21) includes a grayscale modulator (22) for modulating selected ones of said image samples in accordance with said binary data to superimpose a low contrast binary modulation on said selected image samples, said selected image samples having constant nominal grayscale values that are modulated in accordance with said binary data; and a grayscale printer (23) coupled to said modulator (22) for printing a hardcopy rendering of said image in response to said image samples, thereby embedding said binary data in said hardcopy.

2. A system (21) as claimed in Claim 1, characterised in that at least some of said selected image samples define background characteristics of said image.

3. A system (21) as claimed in claim 1, characterised in that at least some of said selected image samples define a foreground feature of said image.

4. A system (21) as claimed in Claim 3, characterised in that other of said selected image samples define background characteristics of said image.

5. A system (21) as claimed in any one of Claims 1 to 4, characterised in that the modulation of said selected image samples is reproduced by said printer (23) at a contrast and spatial frequency that cause said modulation to be imperceptible to a normal observer who views said hardcopy rendering at normal viewing distance under normal illumination.

6. A method for embedding binary data in a hardcopy rendering of a grayscale image that is defined by a set of image samples of varying grayscale value, characterised in that said method includes selecting image samples for at least one spatially contiguous portion of said image that are of constant nominal grayscale value; modulating the grayscale values of said selected image samples in accordance with said binary data to cause said selected image samples to swing back and forth between near neighboring grayscale values at a predetermined frequency as a function of said binary data; and printing said hardcopy rendering of said image in response to said image samples, including said selected samples.

7. A method as claimed in Claim 6, characterised in that at least some of said selected image samples define background characteristics of said image.

8. A method as claimed in Claim 7, characterised in that at least some of said selected image samples define a foreground feature of said image.

9. A method as claimed in Claim 8, characterised in that other of said selected image samples define background characteristics of said image.

10. A method as claimed in any one of Claims 6 to 9, characterised in that the modulation of said selected image samples is reproduced by said printer (23) at a contrast and spatial frequency that cause said modulation to be imperceptible to a normal observer who views said hardcopy rendering at normal viewing distance under normal illumination.

Digital
Data

Clock

Control
Signal

*26*

AND

*25*

Buffer

*21*

Grayscale
Image
Samples

*22*

Grayscale
Modulator

*23*

Grayscale
Printer

Printed
Image

## Fig. 1

Spatial Frequency
(Cycles/Degree)

0.1    1    10    100

0.001 — 1,000

Invisible

0.01 — 100

Threshold
Contrast

Sensitivity
(1/Threshold
Contrast)

Visible

0.1 — 10

1.0 — 1

0.1    1    10    100

Spatial Frequency
(Cycles/MM On Retina )

## Fig. 4

6

Fig. 2

Fig. 3

European Patent
Office

**EUROPEAN SEARCH REPORT**

Application Number

EP    91 31 1982

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | ELECTRONICS AND COMMUNICATIONS IN JAPAN; vol. 72, no. 4, April 1989, PART 1, NEW YORK; US pages 50 - 56; Y. NAKAMURA ET AL.: 'A Unified Coding Method of Dithered Image and Text Data Using Micropatterns' * abstract; figure 7 * * page 55,  7. Conclusions * | 1,6 | H04N1/387 G09C5/00 G06K1/12 |
| D,A | US-A-4 754 127 (BRASS ET AL.) 28 June 1988 * abstract; figure 2 * * column 3, line 30 - column 4, line 25 * | 1,6 | |
| A | US-A-3 835 297 (INOUE ET AL.) 10 September 1974 * abstract; figure 3 * * column 3, line 65 - column 4, line 8 * | 1,6 | |
| A | PATENT ABSTRACTS OF JAPAN vol. 14, no. 79 (E-888)14 February 1990 & JP-A-1 292 965 ( TOYO COMMUN EQUIP CO LTD ) 27 November 1989 * abstract * | 1,6 | **TECHNICAL FIELDS SEARCHED (Int. Cl.5 )** G06K G09C |

The present search report has been drawn up for all claims

| Place of search | Date of completion of the search | Examiner |
|---|---|---|
| THE HAGUE | 09 APRIL 1992 | REVELLIO H.S. |